# EUROPEAN PATENT APPLICATION

(11) **EP 2 333 874 A1**
(43) Date of publication of application: **15.06.2011**
(21) Application number: 10015446.7
(22) Date of filing: 08.12.2010
(51) Int. Cl.: H01M 2/10

(54) **Battery pack**

(30) Priority: 10.12.2009 JP 2009280499
(71) Applicant: Sanyo Electric Co., Ltd., Osaka 570-8677 (JP)
(72) Inventor: Oono, Yasuhiro, Moriguchi-shi Osaka 570-8677 (JP)
(74) Representative: Hertz, Oliver

(57) **Abstract**

A first case 11 includes protruding portions 11d to 11g on an opening end edge parts. Interlocking holes 11d1 to 11g1 are formed in the protruding portions 11d to 11g, respectively. Pairs of inner plates 11i1 to 11l2 are arranged on opening interior parts of the protruding portions 11d to 11g, respectively. Interlocking hooks of a second case are sandwiched between the protruding portions 11d to 11g, and the pairs of inner plates 11i1 to 11l2, and are held in the thickness direction, when the first and second cases interlocks with each other. The side wall 11h of the first case 11 has a draft on the interior side wall surface except for at least parts in that the inner plates 11i1 to 11l2 are arranged. The interior wall surfaces of the inner plates 11i1 to 11l2 have an inclination angle smaller than the draft of the wall portion 11h.

## Description

### BACKGROUND OF THE INVENTION

### 1. Field of the Invention

The present invention relates to a battery pack, and in particular to a battery pack that includes two case members that are coupled to each other by an interlocking structure to compose an exterior case.

### 2. Description of the Related Art

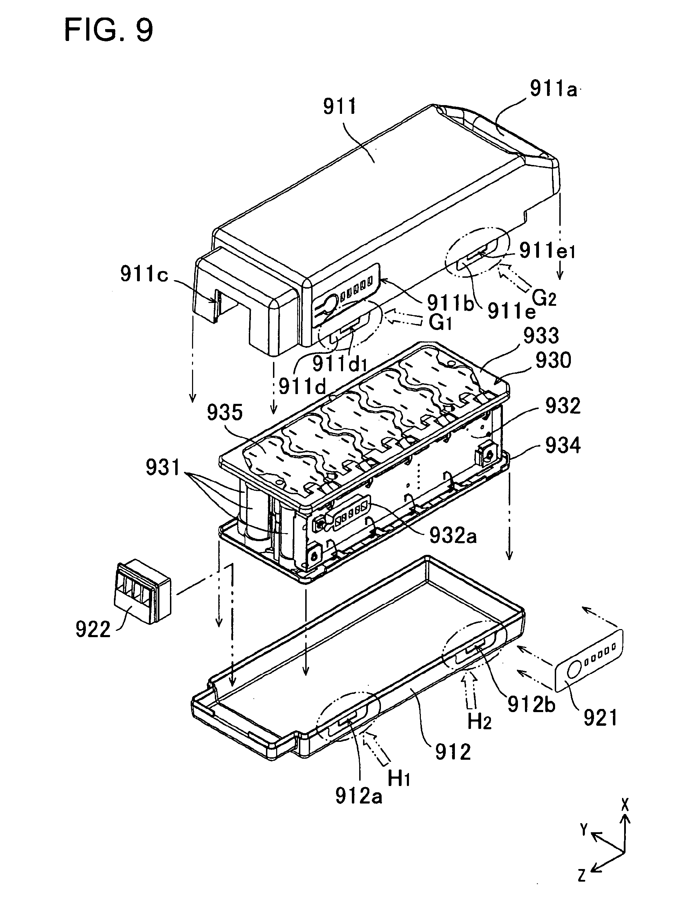

In recent years, battery packs have been widely used as a power supply in notebook personal computer (notebook PC) and power tool as well as power assisted electric bicycle, hybrid electric vehicle (HEV), and electric vehicle (PEV).
For example, as shown in Fig. 9, a battery pack includes an exterior case composed of first and second case members 911 and 912, and a core pack 930 accommodated in the exterior case. The first case member 911 located on the upper side in the Z direction includes a grip portion 911a, an indicator fit-in portion 911b, an opening 911c for accommodating an external connector 922, and the like.

The core pack 930 include a plurality of base batteries (cylindrical rechargeable batteries) 931, holders 933 and 934 that hold the upper and lower sides of the base batteries in the Z direction, a circuit board substrate 932 that is arranged on the front side in the Y direction, and lead plates 935, ... that connect the base batteries 931 to each other. Also, the circuit board 932 and the external connector 922 are connected to each other by lead lines (not shown).
In addition, an indicator display portion 932a is arranged on the circuit board 932. The display portion 932a is visible for users through a window portion that opens on the bottom of the recessed portion 911b of the first case member 911. A transparent film 921 is placed on the recessed portion 911b of the first case member 911, and closes the window portion to prevent that moisture and dust enters the battery pack.

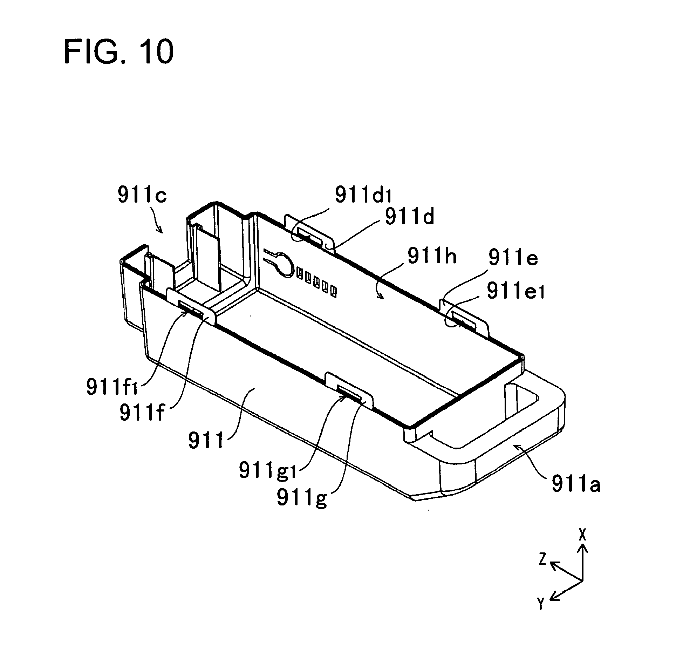

Cost reduction of battery packs is required. Accordingly, various efforts are under way to reduce battery pack cost. For example, as shown in Fig. 9, instead of adhesive or supersonic vibration jointing method or the like, the first case member 911 and the second case member 912 have been designed to be assembled by interlocking of interlocking holes 911d1 and 911e1 arranged in protruding portions 911d and 911e (shown by arrows with G₁ and G₂) with interlocking hooks 912a and 912b (shown by arrows H₁ and H₂). Similarly, as shown in Fig. 10, the first case member 911 forms protruding portions 911f and 911g defining interlocking holes 911f1 and 911g1 at the opposing side of the first case member 911. According to this design, the number of man-hours in manufacturing and cycle time can be reduced. Accordingly, it is possible to reduce manufacturing cost.

See Japanese Patent Laid-Open Publications Nos. 2003-123715 and 2008-140730.

### SUMMARY OF THE INVENTION

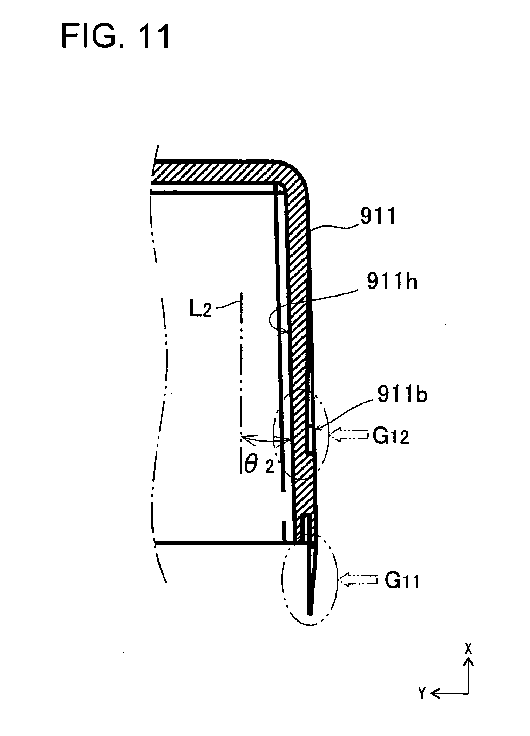

However, in the case where the first case member 911 and the second case member 912 are assembled by the interlocking, if the thickness of the first case member 911 and the second case member 912 is reduced to reduce the weight and size of the battery pack, it may be difficult to ensure interlocking strength.
More specifically, for example, as shown in Fig. 10, the side walls 911h, ... of the first case member 911 have a draft angle on the interior wall surface side. For this reason, in the case where the thickness of the first case member 911 and the second case member 912 is reduced to reduce the weight and size of the battery pack, it is necessary to reduce the thickness of protruding portions 911d, 911e, 911f and 911g, and the interlocking hooks 912a, 912b, ....
Accordingly, their strength may be insufficient. This can be seen by an arrow G₁₁ of a cross-sectional view in Fig. 11.

The present invention is aimed at solving the aforementioned problem. It is an object of the present invention to provide a battery pack that can reduce manufacturing cost by interlocking case members with each other in assembling but can ensure sufficient interlocking strength between the case members even if the weight and size of the case member are reduced.

To achieve the aforementioned object, the present invention provides a battery pack that has the following construction.
The battery pack according to the present invention includes an exterior case and a base battery portion. The exterior case comprises first and second case members that are coupled to each other. The base battery portion is accommodated in the exterior case.
The first and second case members have a bottom-closed hollow shape. The first and second case members are coupled to each other by interlocking of an interlocking hook with an interlocking opening. The interlocking hook and the interlocking opening are formed in opening end edge parts of the first and second case members. An interlocking structure portion of the first case member has an inner plate portion that extends in the opening end edge part along the opening interior side of a side wall of the first case member so that a groove portion is formed to sandwich an interlocking structure portion of the second case member between the side wall and the inner plate portion and to hold the interlocking structure portion of the second case member in the wall thickness direction.

In addition, in the thus-constructed battery pack according to the present invention, the side wall of the first case member has a draft angle on the interior side wall surface except for at least the part in that the interlocking structure portion is arranged, and the inclination angle of the interior wall surface of the inner plate portion in the interlocking structure portion in the first case member is smaller than the draft angle of the interior side wall surface.

In the battery pack related to the present invention, the interlocking structure portion of the first case member has the inner plate portion, which extends along the side wall. The interlocking structure portion of the second case member is sandwiched between the side wall and the inner plate portion of the first case member, and is thus held in the wall thickness in the groove portion between the side wall and the inner plate portion of the first case member. According to the thus-constructed battery pack according to the present invention, once the interlocking structure portion of the first case member interlocks with the interlocking structure portion of the second case member, the interlocking structure portions are resistant to disengagement even when being subjected to vibration or the like. The reason is that the interlocking structure portion of the second case member is held in the groove portion of the interlocking structure portion of the first case member.

In addition, in the battery pack according to the present invention, since the first case member and second case member are coupled to each other by interlocking, as compared with the case where the first case member and second case member are coupled by using adhesive or supersonic vibration, the assembling process can be simplified. Therefore, the battery pack according to the present invention has an advantage from viewpoint of manufacturing cost.
Also, according to the thus-constructed battery pack according to the present invention, since the inclination angle of the interior wall surface of the inner plate portion in the interlocking structure portion in the first case member is smaller than the draft angle of the interior side wall surface, the interior side wall surface can surely have a draft angle, and in addition to this the inner plate portion can have a sufficient thickness. For this reason, even in the case where the thickness of the first case member is reduced to reduce the weight and size of the first case member, the first case member can securely interlock with another member. In addition, since the first case member has a draft angle on its the interior side wall surface, it is necessary neither to reduce space for accommodating the core pack (base battery portion) in order that the first case member can securely interlock with the second case member nor to increase the external shape of the first case member, but the first case member can interlock securely with the second case member.

In addition, in the battery pack related to the present invention, since the inclination angle of the interior wall surface is small, the interlocking structure portion can have a sufficient thickness. From this viewpoint, it is possible to ensure sufficient mechanical strength.
For this reason, according to the battery pack of the present invention, it is possible to reduce manufacturing cost by interlocking case members with each other in assembling but can ensure sufficient interlocking strength between the case members even if the weight and size of the case member are reduced.

The thus-constructed battery pack according to the present invention can optionally have the following construction.
In the battery pack according to the present invention, the opening end edge part of the side wall in the interlocking structure portion of the first case member can protrude toward the second case member, and a through hole as the interlocking opening can be formed penetrating the protruding part (side wall protruding portion) in the thickness direction of the side wall. In addition, in the battery pack according to the present invention, the interlocking structure portion of the second case member can comprise the interlocking hook corresponding to the through hole (interlocking hole). In this construction, the interlocking hook of the second case member interlocks with the hole arranged in the side wall protruding portion of the first case member. In this interlocking state, the inner plate portion in the first case member will press a surface of the second case member opposite to the surface with the interlocking hook. Therefore, this interlocking state cannot be easily disengaged by vibration from the outside.

In the battery pack according to the present invention, the inner plate portion of the first case member can have a hole as the interlocking opening that penetrates the inner plate portion in the thickness direction of the inner plate portion, and the interlocking hook can be arranged facing toward the opening interior side corresponding to the hole in the interlocking structure portion of the second case member. In addition, in the battery pack according to the present invention, the second case member can have a slit that is arranged at a position corresponding to the inner plate portion of the first case member, and when a force is applied through the slit so that the inner plate portion deforms toward the opening interior side, the interlocking hook and the interlocking opening can be disengaged from each other.

According to the thus-constructed battery pack of the present invention, although the first case member may not be decoupled from the second case member in the case users handle the battery pack in usual use, the first case member can be disconnected from the second case member by using a dedicated tool to be inserted through the slit formed in the second case member in battery pack reclamation (reuse or recycling). For this reason, in this construction, it is possible to easily disassemble the package and to reuse or recycle used battery packs after reclamation. Therefore, this battery pack has an advantage from viewpoint of ecology.

In the battery pack according to the present invention, in addition to the aforementioned construction, a part of the side wall exterior surface of the first case member can be recessed in the wall thickness direction of this side wall, and the inclination angle of the interior wall surface of the part corresponding to the recessed section (recessed part) in the side wall can be smaller than the draft angle of the interior side wall surface whereby increasing the thickness of this part. Since the thickness of the first case member is thus increased on the back side of the recessed section, it is possible to avoid increasing the entire size of the exterior case and additionally to ensure a sufficient thickness in this part. Therefore, this battery pack has an advantage from viewpoint of strength.

That is, as shown in Fig. 11, in the conventionally-designed battery pack, which has the recessed portion 911b (show by an arrow G₁₂) arranged in a part of side wall exterior surface of the first case member 911, the thickness of a part corresponding to the recessed portion 911b is small since the interior side wall surface of the first case member 911 has a draft angle (inclination angle Θ₂ with respect to a fictitious vertical line L₂). For this reason, the part corresponding to the recessed portion 911b may have an insufficient strength when the thickness of the first case member is further reduced similar to the protruding portion (shown by the arrow G₁₁). Contrary to this, since the thickness of the first case member is increased on the back side of the recessed section by using space that is conventionally wasted due to the draft angle of the side wall, it is possible to ensure sufficient strength in the part corresponding to the recessed section without increasing the entire size of the exterior case.

In addition to the thus-constructed battery pack, a window portion can be formed in the bottom of the recessed section to expose a display portion of an indicator, and a transparent film can be placed on the recessed section.
Each of the first and second case members may be formed of separated members including the inner plate portion and the like after the separated members are separately formed and are then connected to each other. However, in the battery pack according to the present invention, from viewpoint of manufacturing cost including parts management cost, it is preferable that each of the first and second case members be integrally formed of a resin material.
The above and further objects of the present invention as well as the features thereof will become more apparent from the following detailed description to be made in conjunction with the accompanying drawings.

### BRIEF DESCRIPTION OF THE DRAWINGS

Fig. 1 is a perspective view schematically showing the outward appearance of a battery pack 1 according to a first embodiment;
Fig. 2 is a developed perspective view schematically showing the internal construction of the battery pack 1;
Fig. 3 is a perspective view schematically showing the construction of a first case member 11 of the battery pack 1;
Fig. 4 is a cross-sectional view schematically showing the construction of an opening end of the first case member 11;
Fig. 5 is a cross-sectional view schematically showing the interlocking construction between the first case member 11 and the second case member 12;
Fig. 6 is a perspective view schematically showing the outward appearance of a battery pack 2 according to a second embodiment;
Fig. 7 is a perspective view schematically showing the interlocking construction between the first case member 41 and the second case member 42 in the battery pack 2;
Fig. 8 is a perspective view (partially sectional view) schematically showing operating procedure that disengages the first case member 41 and the second case member 42 from each other;
Fig. 9 is a developed perspective view schematically showing the construction of a conventionally-designed battery pack;
Fig. 10 is a perspective view schematically showing the construction of a first case member 911 of the conventionally-designed battery pack; and
Fig. 11 is a cross-sectional view schematically showing a part of the construction of the first case member 911 of the conventionally-designed battery pack.

### DETAILED DESCRIPTION OF THE EMBODIMENT(S)

The following description will describe embodiments according to the present invention with reference to the drawings. It should be appreciated, however, that the embodiments and modified embodiments described below are illustrations to give a concrete form to technical ideas of the invention for sake of understanding the construction and the working effects of the present invention, the present invention is not specifically limited to the embodiments except for essential elements.

### FIRST EMBODIMENT

### 1. Outward Appearance of Battery Pack 1

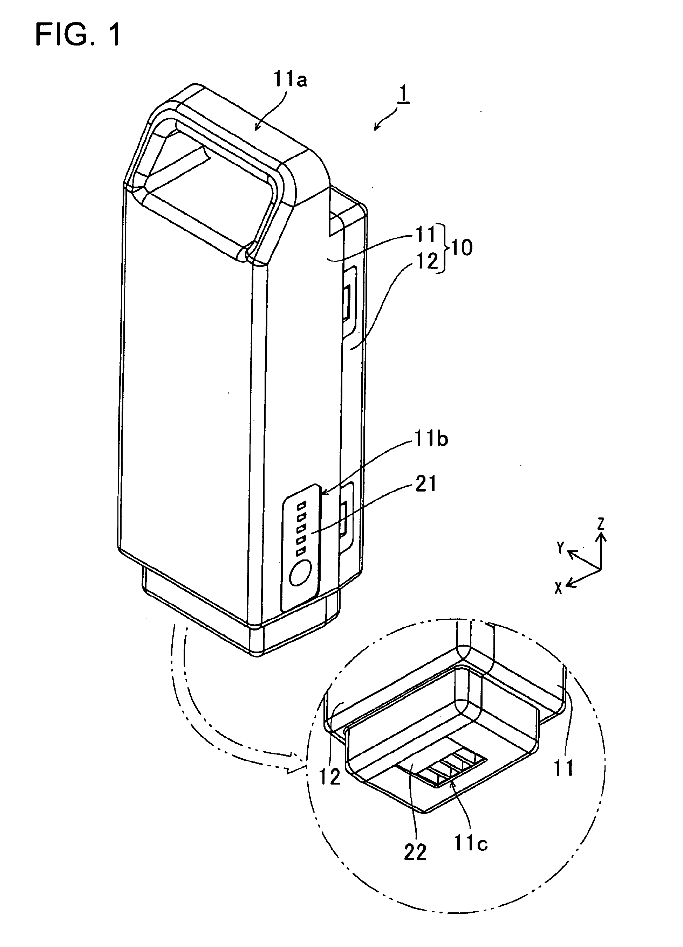

The outward appearance of a battery pack 1 according to a first embodiment is now described with reference to Fig. 1.

As shown in Fig. 1, the battery pack 1 has a rectangular external shape that is elongated in the Z direction. The outward appearance of the battery pack 1 is formed by an exterior case 10. The exterior case 10 is composed of a first case member 11 and a second case member 12.
The first case member 11 includes a grip portion 11a on the upper part in the Z direction. Users can grasp the grip portion 11a when mounting the battery pack 1 to a device or carrying the battery pack 1. Also, the first case member 11 has a recessed portion 11b on a side surface on the front side in the Y direction. An LED portion cover film 21 is placed on the recessed portion 11b.

As shown in a part enclosed by a two-point dashed line in Fig. 1, an opening portion 11c is formed in the bottom wall of the first case member 11. An external connector 22 is exposed from the opening portion 11c.

### 2. Internal Construction of Battery Pack 1

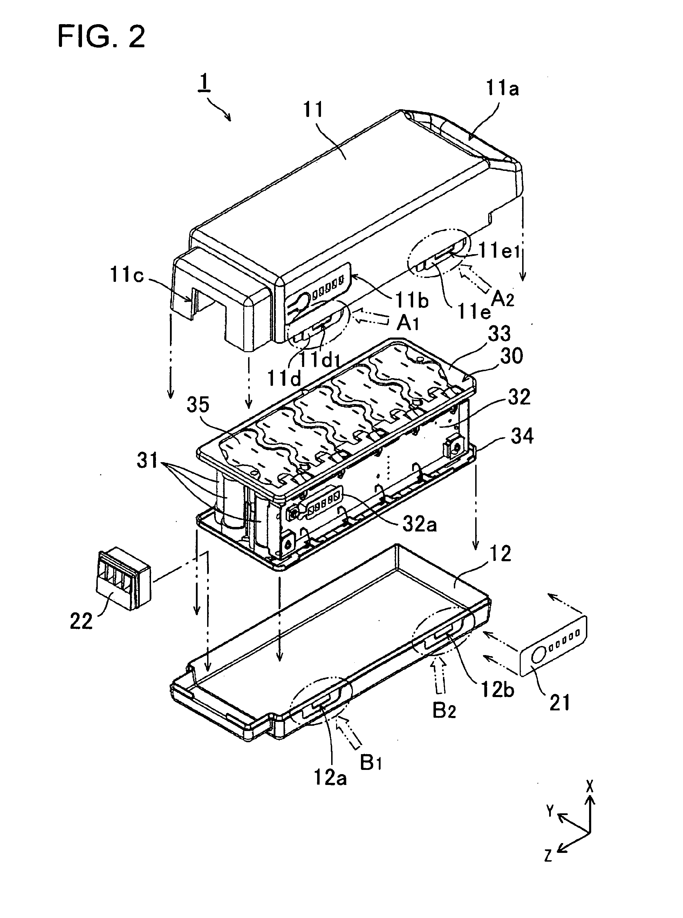

The internal construction of the battery pack 1 is now described with reference to Fig. 2.
As shown in Fig. 2, in the battery pack 1 includes a core pack 30 that has a substantially rectangular parallelepiped shape, and is accommodated in internal accommodation space defined by the first case member 11 and the second case member 12. The core pack 30 includes a plurality of cylindrical base batteries 31, and a circuit board 32 as main components. The circuit board 32 is provided on a power transmission path between the base batteries 31 and the external connector 22. Lead lines between the circuit board 32 and the external connector 22 are not shown in Fig. 2.

In addition, the core pack 30 includes first and second holders 33 and 34, and lead plates 35, ... (lead plates arranged on the bottom side in the X direction are not show). The plurality of base batteries are sandwiched between the first and second holders 33 and 34 so that the first and second holders 33 and 34 hold the top and bottom parts of the base batteries in the X direction. The lead plates 35, ... electrically connect the plurality of base batteries 31 to each other.
An LED portion 32a as indicator is mounted on the circuit board 32 as well as various types of electronic components. A window portion is formed on the bottom of the recessed portion 11b of the first case member 11. Light emitted from the LED portion 32a can outgo through the window portion. The LED portion cover film 21 has light transparency at least in a part corresponding to the window portion.

The first case member 11 and the second case member 12 are coupled to each other by interlocking of interlocking hooks 12a, 12b ... with interlocking holes 11d1, 11e1, .... The interlocking hooks 12a, 12b ..., and interlocking holes 11d1, 11e1, ... are formed in opening end edges or a part in proximity to the opening end edges (opening end edge parts) of the first case member 11 and the second case member 12. The interlocking hole 11d1, 11e1, ... of the first case member 11 are formed in parts (protruding portions) 11d, 11e, ... that protrude downward from the opening end edge parts of the first case member 11 in the X direction (shown by arrows A₁ and A₂).

The interlocking hooks 12a, 12b, ... of the second case member 12 are formed in the exterior surfaces of side walls of the second case member 12 (shown by arrows B₁ and B₂).

### 3. Detailed Construction of First Case Member 11

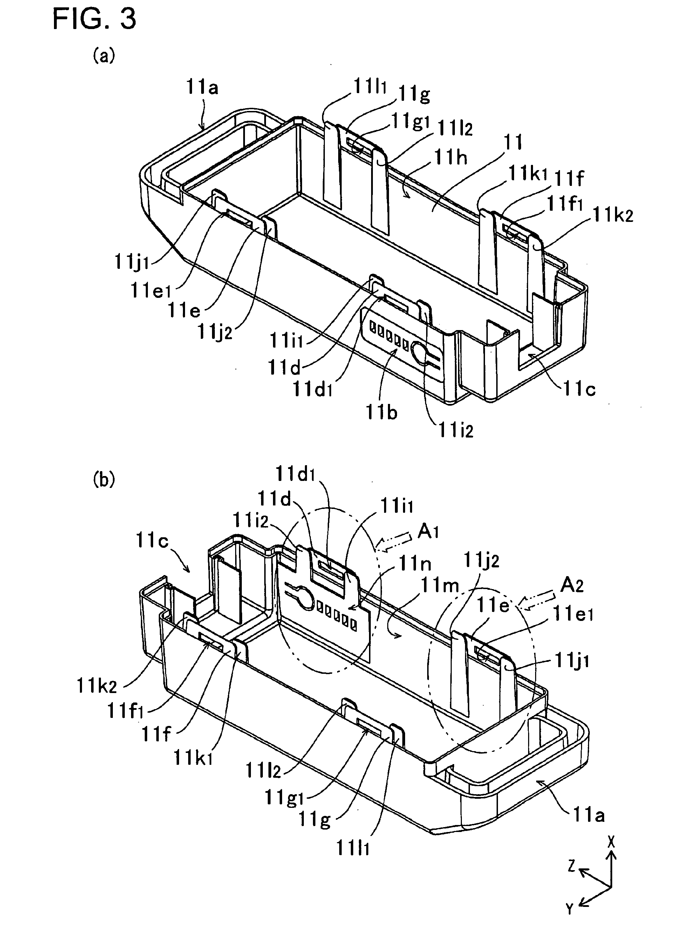

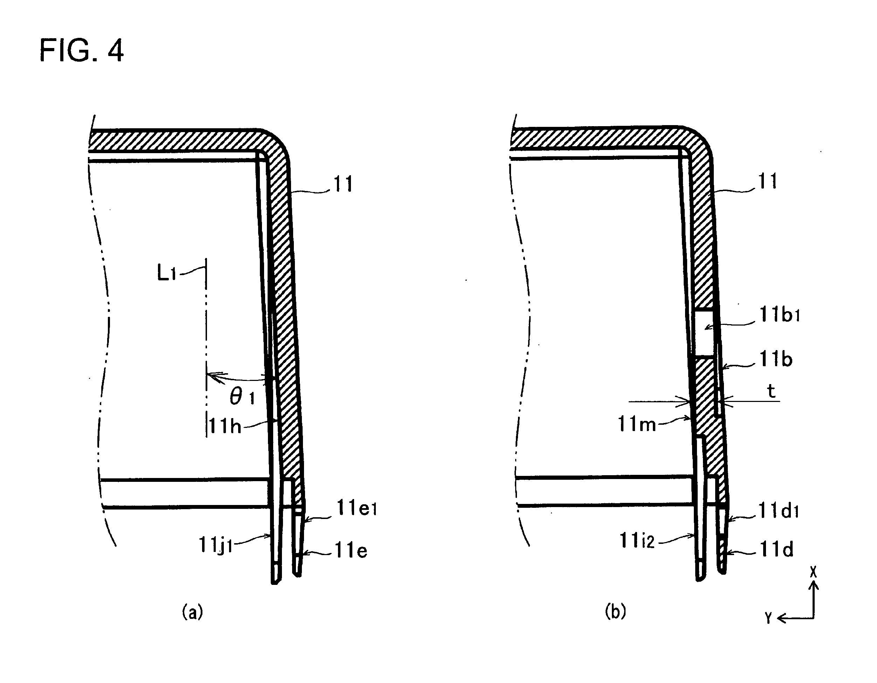

The detailed construction of the first case member 11 is now described with reference to Figs. 3 and 4.
As shown in Figs. 3(a) and 3(b), in the first case member 11, four protruding portions 11d, 11e, 11f and 11g are arranged protruding upward from the opening end edge parts in the X direction. The interlocking hole 11d1, 11e1, 11f1 and 11g1 are formed in the protruding portions 11d, 11e, 11f and 11g, respectively.

Also, in the first case member 11, as shown in Figs. 3(a) and 3(b), pairs of inner plate portions 11i1 and 11i2, 11j1 and 11j2, 11k1 and 11k2, and 11l1 and 11l2 are formed corresponding to the protruding portions 11d, 11e, 11f and 11g, respectively. Thus, two inner plate portions are formed corresponding to each protruding portion. The pairs of inner plate portions 11i1 and 11i2, 11j1 and 11j2, 11k1 and 11k2, and 11l1 and 11l2 are arranged along opening edges (Z direction) and on both the outsides of the interlocking holes 11d1, 11e1, 11f1 and 11g1, respectively. Thus, two inner plate portions are arranged on both the outsides of each interlocking hole. The inner plate portions have an elongated sheet shape that extends in the Z direction.

In the first case member 11, groove portions are formed by the protruding portions 11d, 11e, 11f and 11g, and the corresponding pairs of inner plate portions 11i1 and 11i2. 11j1 and 11j2, 11k1 and 11k2. and 11l1 and 11l2. Thus, the groove portion is formed by each protruding portion and each pair of inner plate portions. Parts of the second case member 12 corresponding to the interlocking hooks 12a, 12b, ... are held in the groove portions in the wall thickness direction.
In consideration of manufacture process, as shown in Fig. 4(a), the interior wall surface of a side wall 11h of the first case member 11 has a draft angle Θ₁ with respect to the X direction. That is, in order to facilitate removal of the first case member 11 from a mold in resin molding, the interior wall surface of the side wall 11h of the first case member 11 has a draft angle so that the interior width of the first case member 11 gets wider from the bottom toward the opening end edge parts.

As shown in Fig. 4(a), in the battery pack 1 according to this embodiment, the interior wall surfaces of the inner plate portion 11j1, ... of the first case member 11 have an inclination angle smaller than the draft angle of the interior wall surface 11h of the aforementioned side wall. Specifically, the inclination angle of the inner plate portions 11j1, ... is substantially 0°. Thus, the inner plate portions 11j1, ... are substantially parallel to the depth direction axis L₁ of the first case member 11 extending along the X axis.

The battery pack 1 according to this embodiment maximizes effective use of space of the interior surface parts of the case side walls, which are wasted due to the draft angle in the conventionally-designed exterior case, so that the inner plate portions 11i1, 11i2, 11j1. 11j2. 11k1, 11k2, 11l1 and 11l2 are arranged in these parts. Thus, the interlocking holes 11d1, 11e1, 11f1 and 11g1 of the first case member 11 cannot be easily disengaged (unlocked) from the interlocking hooks 12a, 12b, ... of the second case member 12 by vibration from the outside, or the like.

Since the inner plate portions 11i1, 11i2. 11j1, 11j2, 11k1, 11k2. 11l1 and 11l2 are thus arranged, it is possible to surely provide the draft angle to the side walls and additionally to ensure the mechanical strength of the inner plate portions 11i1, 11i2, 11j1, 11j2, 11k1, 11k2, 11l1 and 11l2.
In addition, since the inner plate portions 11i1, 11i2, 11j1, 11j2, 11k1, 11k2, 11l1 and 11l2 are arranged in proximity to the protruding portions 11d, 11e, 11f and 11g, it is possible to provide an effect in that the side walls are mechanically reinforced. Since the battery pack 1 maximizes effective use of space corresponding to the draft angle of the side wall interior surfaces in the first case member 11 to form the inner plate portions 11i1, 11i2, 11j1, 11j2, 11k1, 11k2, 11l1 and 11l2, the external size of the first case member 11 is not increased.

As shown in Fig. 3(a) and 3(b), a thicker portion 11n is formed on a back surface (interior side surface) part of the side wall corresponding to the recessed portion 11b (shown by the arrow A₁ in Fig. 3(b)). The thicker portion 11n is also formed by reducing the inclination angle of the interior surface to an angle smaller than the draft angle of the interior wall surface 11h of the aforementioned side wall similarly to the inner plate portions 11i1, 11i2, 11j1, 11j2, 11k1, 11k2, 11l1 and 11l2. Accordingly, as shown in Fig. 4(b), in the battery pack 1, the thickness (wall thickness t) of the back surface part of the recessed portion 11b can be increased without increasing the external size of the first case member 11. Therefore, it is possible to improve the strength of the first case member 11.

As shown in Fig. 4(b), although the window portion 11b1 is formed in the recessed portion 11b to externally expose the LED portion, since the recessed portion 11b is reinforced by the thicker portion 11n, problems will not arise in mechanical strength.

### 4. Interlocking of First Case Member 11 with Second Case Member 12

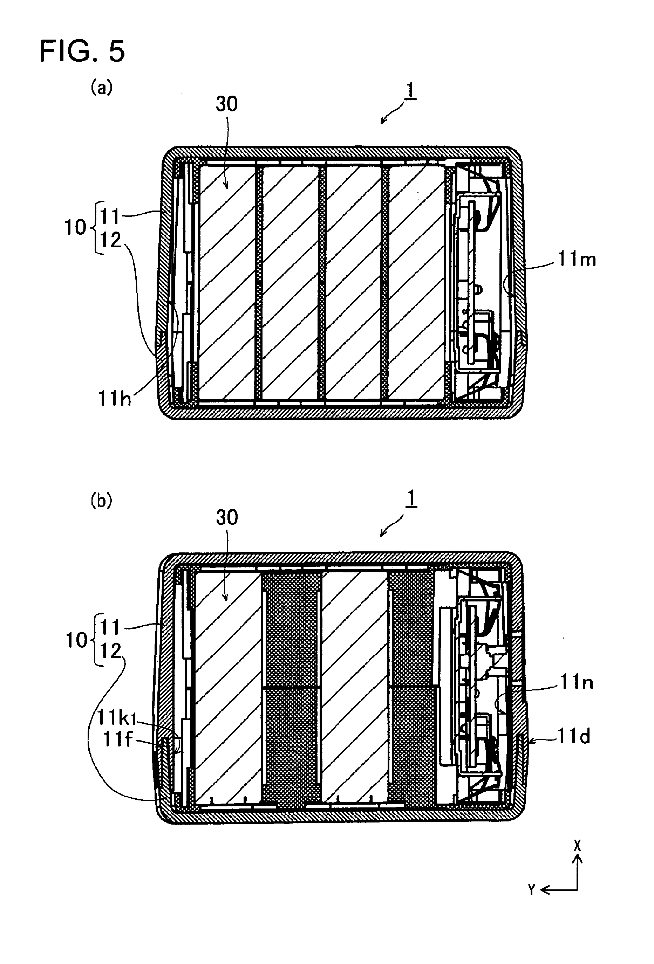

Interlocking of the first case member 11 with the second case member 12 is now described with reference to Fig. 5.

At first, as shown in Fig. 5(a), space remains between the interior wall surfaces 11h, 11m, ... of the first case member 11 and the second case member 12, and the core pack 30 in areas at least except for interlocking structure portions (interlocking holes 11d1, 11e1, 11f1 and 11g1, and interlocking hooks 12a, 12b, ...) of the side wall of the first case member 11 and the second case member 12. The reason is that the interior wall surfaces 11h, 11m, ... of the side walls of the first case member 11 and the second case member 12 have the draft angle.

On the other hand, as shown in Fig. 5(b), the inner plate portions 11i1, 11i2, 11j1, 11j2. 11k1. 11k2, 11l1 and 11l2 the interior wall surfaces of which have a smaller inclination angle are arranged in areas in that the interlocking structure portions (interlocking holes 11d1, 11e1, 11f1 and 11g1) of the first case member 11 are formed. Since the inner plate portions 11i1, 11i2, 11j1, 11j2, 11k1, 11k2, 11l1 and 11l2 are formed in space corresponding to the draft angle of the interior wall surfaces of the side walls, it is possible to improve the mechanical strength of the side walls and interlocking strength without increasing the external size of the exterior case 10.

### SECOND EMBODIMENT

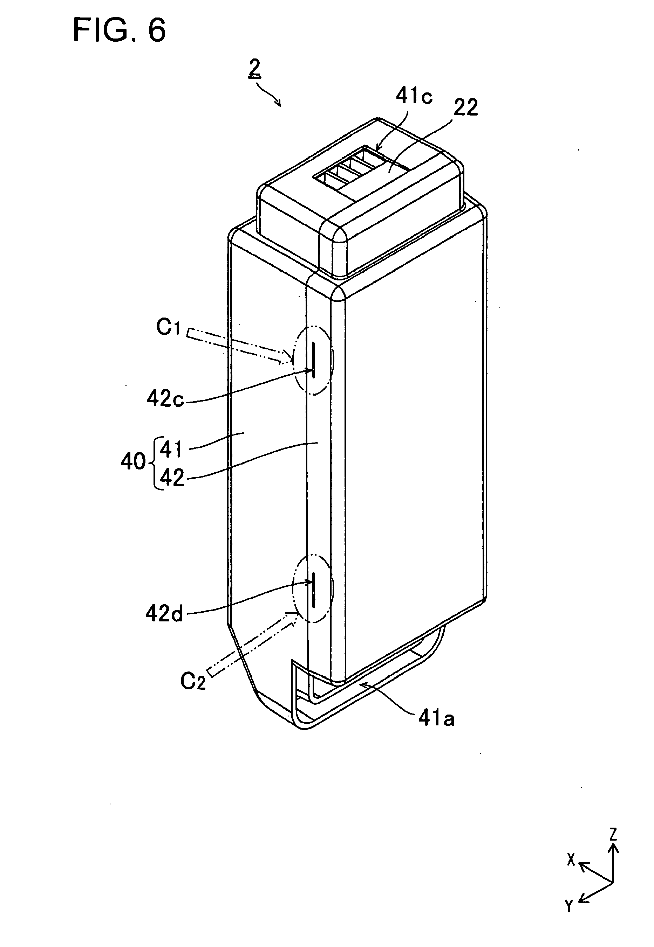

A battery pack 2 according to a second embodiment is now described with reference to Figs. 6 to 8.

### 1. Outward Appearance of Battery Pack 2

As shown in Fig. 6, also in the battery pack 2, an exterior case 40 is composed of a first case member 41 and a second case member 42, similarly to the aforementioned battery pack 1. Similarly, the first case member 41 has a grip portion 41a and an opening portion 41c.

In the battery pack 2 according to this embodiment, slits 42c and 42d are formed in a side wall of the second case member 42 (shown by arrows C₁ and C₂).

### 2. Interlocking of First Case Member 41 with Second Case Member 42

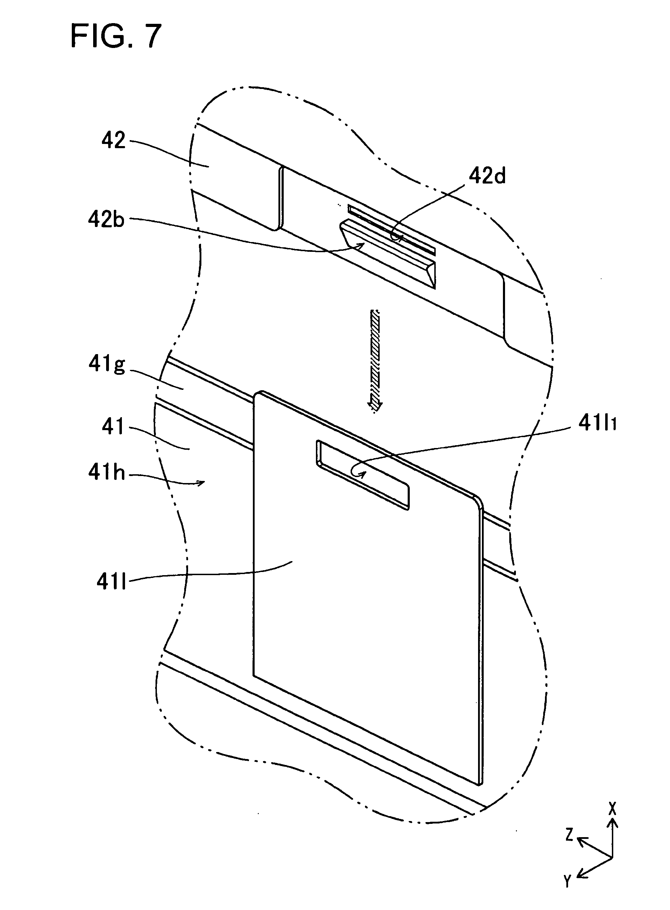

As shown in Fig. 7, in the battery pack 2, interlocking holes are not formed in an opening end edge part 41g of a side wall 41h of the first case member 41, but an interlocking hole 4111 is formed in an inner plate portion 41l that is formed on the interior side of the side wall 41h in the Y direction. Correspondingly, an interlocking hook 42b of the second case member 42 protrudes toward the case interior side, and interlocks with the interlocking hole 4111, which is formed in the inner plate portion 41l of the first case member 41.

As shown in Fig. 7, the slit 42d is opened directly above the interlocking hook 42b of the second case member 42 in the X direction. The slit 42d penetrates the side wall of the second case member 42 in the thickness direction. After the first case member 41 is coupled to the second case member 42, the upper part of the inner plate portion 41l relative to the interlocking hole 41l1 in the X direction is located inside the slit 42d in the Y direction and is exposed through the slit 42d. In other words, the slit 42d is sealed by the inner plate portion 41l of the first case member 41, which is located inside the slit 42d so that dust, moisture and the like cannot enter the interior of the exterior case 41.

### 3. Interlocking/Disengagement of First Case Member 41 with/from Second Case Member 42

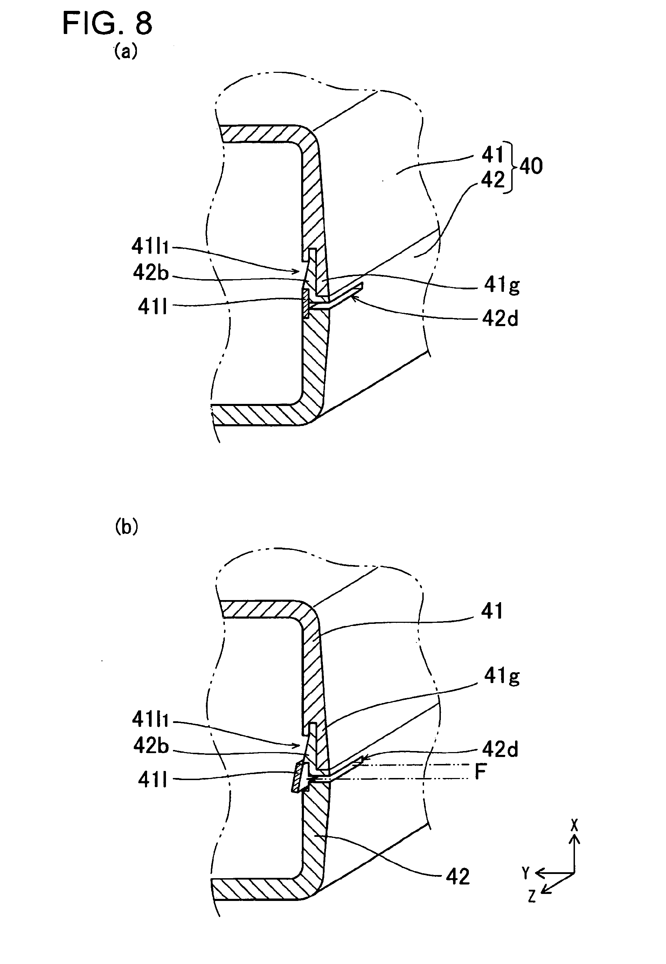

Interlocking/disengagement of the first case member 41 with/from the second case member 42 are now described with reference to Fig. 8.
As shown in Fig. 8(a), the exterior case 40 is composed of the first case member 41 and the second case member 42 interlocking with each other. Specifically, the interlocking hook 42b of the first case member 41 interlocks with the interlocking hole 4111 formed in the inner plate portion 41l of the second case member 42.

After the interlocking hook 42b interlocks with the interlocking hole 4111, the opening end edge part 41g of the first case member 41 presses a part of the opening end edge part of the second case member 42 corresponding to the back of the interlocking hook 42b. Accordingly, users who use the battery pack 2 may not disassemble the package (exterior case 40).
For example, recycling or reuse of used battery pack 2 can be taken into consideration. Some parts of used battery pack 2 may be replaced in reuse.
In this case, the manufacturer, recycling manufacturer or the like has to disassemble the exterior case 40 after reclaiming battery packs 2 from users.
In this case, it is preferable to maximize reuse of the exterior case 40. From this viewpoint, in the battery pack 2, the exterior case 40 has the slit 42d to maximize reuse of the exterior case 40 when be disassembled.

That is, as shown in Fig. 8(b), force F is applied to the inner plate portion 41l by using a dedicated tool through the slit 42d to press (bend) the inner plate portion 41l inward. Thus, the interlocking hook 42b can be disengaged from the interlocking hole 41l1. Accordingly, the first case member 41 can be decoupled from the second case member 42 without breakage of the interlocking hook 42b or the interlocking hole 4111 of the inner plate portion 41l.

After the first case member 41 is decoupled from the second case member 42, the inner plate portion 41l will return to the original position by its elasticity. Thus, the first case member 41 and the second case member 42 can be reused.
Since the draft angle of the side wall 41h of the first case member 41 or the second case member 42, and the inclination angle of the inner plate portion 41l have the same relationship as the foregoing first embodiment, description of the relationship is omitted. For this reason, according to the battery pack 2 of this embodiment, it is possible to reduce manufacturing cost by interlocking the case members 41 and 42 with each other in assembling but can ensure sufficient interlocking strength between the case members 41 and 42 even if the weight and size of the case members 41 and 42 are reduced.

### MODIFIED EMBODIMENTS

In the foregoing first and second embodiments, although the battery packs 1 and 2 have been illustratively described that have an outward appearance of substantially rectangular parallelepiped shape, the outward appearance shape of a battery pack is not limited to this. For example, the outward appearance shape may be flatter or may be cylindrical or disk-shaped.
In the foregoing first and second embodiments, although each of the first case members 11 and 41, and each of the second case members 12 and 42 are integrally formed of a resin material by molding, the material and the formation process are limited to resin and molding. For example, a metal material, a ceramic material, or the like may be used as the material of the case member. As for the formation process, a plurality of parts may be coupled to each other to form each case member. Also, a metal plate or the like may be partially used in an interlocking part to reinforce this part.

In the foregoing first and second embodiments, although the interlocking holes 11d1, 11e1, 11f1, 11g1 and 41l1 have been described that are formed in the first case members 11 and 41, and the interlocking hooks 12a, 12b and 42b have been described that are formed in the second case members 12 and 42, the interlocking holes and the interlocking hooks can be formed in the second case member and the first case member, respectively. In this case, a case member that has interlocking hooks may include plate portions such as the inner plate portions in parallel to a wall surface of the case member. Also, in this case the same effect can be provided.

In the foregoing first and second embodiments, although the base batteries 31 included in the core pack 30 have been described as cylindrical batteries as shown in Fig. 2, the outward appearance shape and the type of the base batteries are not specifically limited. For example, rectangular shaped batteries can be used. Also, various batteries can be used such as nickel cadmium (Ni-Cd) rechargeable battery, nickel metal hydride (Ni-MH) rechargeable battery, and lithium ion (Li-ion) rechargeable battery.

In the foregoing first embodiment, although a part of opening end edge part (interlocking structure portion) of the first case member 11 has been describe that protrudes toward the second case member 12 (protruding portion 11d, 11e, 11f or 11g), the protruding portions are not always required. For example, the opening end edge part can be constructed as in the second embodiment as shown in Figs. 7 and 8.
In the foregoing first and second embodiments, although the interior wall surfaces of the inner plate portions 11i1, 11i2, 11j1, 11j2, 11k1, 11k2, 11l1, 11l2 and 41l have been described that extend substantially in the vertical direction (substantially parallel to the X direction), the interior wall surfaces of the inner plate portions 11i1, 11i2, 11j1, 11j2, 11k1. 11k2. 11l1, 11l2 and 41l are not always required to extend substantially in the vertical direction. The interior wall surfaces of the inner plate portions are only required to have an inclination angle smaller than the draft angle of the interior wall surfaces 11h, 11m, 41h, ... of side walls.

In the foregoing first and second embodiments, the exterior wall surfaces of the side walls of the first case members 11 and 41, and the second case members 12 and 42 are not limited to whether they have a draft angle or not. For example, the exterior wall surfaces of the side walls of the first case members 11 and 41, and the second case members 12 and 42 may not have a draft angle. However, in this case, in the formation process of the case members 11, 12, 41 and 42, removal measurements are required. For example, slidable molds are required corresponding to the exterior wall surfaces of the side walls. This will increase manufacturing cost (mold cost).

Alternatively, the exterior wall surfaces of the side walls of the first case members 11 and 41, and the second case members 12 and 42 can have the same draft angle as or greater than the interior wall surfaces 11h, 11m, 41h, .... For example, the interior wall surfaces 11h, 11m, 41h, ... can have a draft angle of 0.5°, while the exterior wall surfaces can have a draft angle of about 1° to 2°. In this case, the construction of molds can be simple. Therefore, there is an advantage from viewpoint of manufacturing cost. In the case where the interior wall surfaces 11h, 11m, 41h, ... , and the exterior wall surfaces have a draft angle of 2°, even if the depth of the case member is large, thickness variation can be suppressed.

### Industrial Applicability

The present invention is useful to provide a battery pack as power supply for power assisted electric bicycle, HEV, PEV, and the like.

## Claims

1. A battery pack comprising:
an exterior case comprising first and second case members coupled to each other; and
a base battery portion that is accommodated in the exterior case,
wherein
said first and second case members have a bottom-closed hollow shape, and are coupled to each other by interlocking of an interlocking hook with an interlocking opening, wherein the interlocking hook is formed in an opening end edge part of one of said first and second case members, and the interlocking opening is formed in an opening end edge part of the other of said first and second case members, **characterized in that**
an interlocking structure portion of said first case member has an inner plate portion that extends in said opening end edge part along the opening interior side of a side wall of said first case member so that a groove portion is formed to sandwich an interlocking structure portion of said second case member between said side wall and said inner plate portion and to hold the interlocking structure portion of said second case member in the wall thickness direction,
wherein said side wall of said first case member has a draft angle on the interior side wall surface except for at least the part **in that** said interlocking structure portion is arranged,
wherein the inclination angle of the interior wall surface of said inner plate portion in said interlocking structure portion in said first case member is smaller than the draft angle of said interior side wall surface.

2. The battery pack according to claim 1,
wherein said opening end edge part of said side wall in said interlocking structure portion of said first case member protrudes toward said second case member, and a through hole as said interlocking opening is formed penetrating the protruding part in the thickness direction of said side wall, and
wherein said interlocking structure portion of said second case member has said interlocking hook corresponding to said hole.

3. The battery pack according to claim 1, wherein said inner plate portion of said first case member has a through hole as said interlocking opening that penetrates said inner plate portion in the thickness direction of said inner plate portion, wherein said interlocking structure portion of said second case member has interlocking hook that faces toward said opening interior side corresponding to said through hole, wherein said second case member has a slit that is arranged at a position corresponding to said inner plate portion of said first case member, wherein when a force is applied through said slit so that said inner plate portion deforms toward the opening interior side, said interlocking hook and said interlocking opening are disengaged from each other.

4. The battery pack according to any of claims 1 to 3, wherein a part of the side wall exterior surface of said first case member is recessed in the wall thickness direction of this side wall, wherein the inclination angle of the interior wall surface of the part corresponding to said recessed section in said side wall is smaller than the draft angle of said interior side wall surface whereby increasing the thickness of this part.

5. The battery pack according to claim 4, wherein a window portion is formed in the bottom of said recessed section to expose a display portion of an indicator, wherein a transparent film is placed on said recessed section.

6. The battery pack according to any of claims 1 to 5, wherein each of said first and second case members is integrally formed of a resin material.
